(19) Europäisches Patentamt
European Patent Office
Office européen des brevets

(11) **EP 4 350 062 B1**

(12) **EUROPEAN PATENT SPECIFICATION**

(45) Date of publication and mention
of the grant of the patent:
**01.10.2025  Bulletin 2025/40**

(21) Application number: **22816066.9**

(22) Date of filing: **30.05.2022**

(51) International Patent Classification (IPC):
**D04B 21/14** *(2006.01)*    **A47C 7/24** *(2006.01)*
**B60N 2/58** *(2006.01)*    **D04B 21/06** *(2006.01)*
**D04B 21/10** *(2006.01)*

(52) Cooperative Patent Classification (CPC):
**D04B 21/06; B60N 2/58;** D10B 2403/0213;
D10B 2505/08

(86) International application number:
**PCT/JP2022/022005**

(87) International publication number:
**WO 2022/255319 (08.12.2022 Gazette 2022/49)**

(54) **SURFACE COVERING MATERIAL**

OBERFLÄCHENBELAGMATERIAL

MATÉRIAU DE RECOUVREMENT DE SURFACE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **01.06.2021   JP 2021092497**

(43) Date of publication of application:
**10.04.2024   Bulletin 2024/15**

(73) Proprietor: **Asahi Kasei Kabushiki Kaisha
Tokyo 1000006 (JP)**

(72) Inventor: **IKENAGA, Hideo
Tokyo 100-0006 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
EP-B1- 1 865 096        JP-A- 2009 023 452
JP-A- 2009 023 452      JP-A- 2011 069 014
JP-A- 2011 069 014      JP-A- 2013 002 028
JP-A- 2017 014 676      JP-U- S4 719 589
US-A1- 2014 000 319

**Description**

FIELD

The present invention relates to a surface covering material.

BACKGROUND

Three-dimensional knitted fabrics constructed with front/back double-layer knitted fabrics and connecting thread that connects the double-layer knitted fabrics employ monofilaments as the connecting thread and thus have a cushioning property in the thickness direction, while they also ensure high air permeability through the mesh structure of the front and back knitted fabrics, and consequently they are widely used as cool and stuffiness-resistant cushion materials for a variety of articles including seats and beddings.

When a three-dimensional knitted fabric is to be used in a surface covering material for a seat in a vehicle or for furniture, or as upholstery in a vehicle, the front layer knitted fabric of the three-dimensional knitted fabric must exhibit a design property, and it has been proposed to also provide greater form stability by additional design properties in front layer knitted fabrics using different mesh shapes or ridged shapes, or by addition of ridge-like or mesh-like modifications by knitting insertion threads into the front layer knitted fabrics.

For example, for imparting a ridge-shaped design property to a front layer knitted fabric of a three-dimensional knitted fabric, PTL 1 discloses a ridge-shaped three-dimensional knitted fabric having no distortion of the ridges, no deviation in the course direction of the ridges, and satisfactory scratch resistance, by knitting in such a manner that insertion threads distributed at a ratio of one thread per ridge row are inserted and secured at the edge of each ridge for each course in a predetermined swing width, with the insertion threads being bridged and inserted between adjacent ridges in at least some of the courses and secured at the outer ends of both ridges, in order to bind together the stitch rows that form the ridges.

PTL 2 discloses a three-dimensional knitted fabric having a ridged structure for the surface knitted fabric which is composed of chain stitches and inlay stitches, the chain stitches being knitted with two warp threads supplied from at least two different reeds, where the warp thread of one reed, that knits chain stitches occasionally between adjacent warp ridges, forms a connected structure with the right adjacent warp ridge while the warp thread of another reed forms a connected structure with the left adjacent warp ridge, resulting in regularly and orderly arranged stitch rows, to maintain an attractive outer appearance and produce a warp ridge structure in which yarn breakage does not occur during sewing, while avoiding a string-like texture for the warp ridges.

PTL 3 discloses a three-dimensional knitted fabric with an excellent surface tactile sensation without loss of air permeability, obtained by having floating threads on a ground weave surface engaged by inlay stitching, and knitting with floating threads on the ground weave surface such that the percentage of floating threads is 20 to 70% PTL 4 discloses a three-dimensional fabric according to the preamble of claim 1.

[CITATION LIST]

[PATENT LITERATURE]

[PTL 1] Japanese Unexamined Patent Publication No. 2008-255508
[PTL 2] Japanese Unexamined Patent Publication No. 2004-232109
[PTL 3] Japanese Unexamined Patent Publication No. 2005-126884 [PTL 4] US 2014/000319 A1

SUMMARY

[TECHNICAL PROBLEM]

With the three-dimensional knitted fabric of PTL 1, however, the insertion thread is used to prevent distortion or shifting of the ridges by binding the stitch rows forming the ridges and the two adjacent ridges, whereas it does not contribute to an enhanced the design property of the front layer knitted fabric, and has not been able to exhibit both a design property with a sense of depth by the patterning insertion threads and durability including fluff resistance and pull-out resistance of the pattern threads.

Likewise with the three-dimensional knitted fabric of PTL 2, the insertion thread is used for connection in such a manner that the chain stitches at the warp ridges do not converge in a string-like manner, but it does not contribute to an enhanced design property of the front layer knitted fabric, and has not been able to exhibit both a design property with a sense of depth by the patterning insertion threads and durability including fluff resistance and pull-out resistance of the pattern threads.

In the three-dimensional knitted fabric of PTL 3, even though the floating threads are inlay stitched into the front layer knitted fabric, the floating threads float on the surface of the three-dimensional knitted fabric, resulting in poor durability such as fluff resistance of the pattern threads, such that a design property with a sense of depth is not exhibited.

In light of the current level of the prior art, the object of the present invention is to solve the problem of the prior art by providing a surface covering material for a seat for a vehicle or furniture, or for vehicle upholstery, which exhibits a high design property with a sense of depth due to inlay stitched pattern threads, while simultaneously inhibiting pull-out of pattern threads and fluff generation even when the surface is rubbed by hard protrusions such as the hook sections of a hook-and-loop fastener.

[SOLUTION TO PROBLEM]

As a result of much research conducted with the goal of solving the aforementioned problem, the present inventors have completed this invention upon finding, unexpectedly, that the problem can be solved if a surface covering material, constructed from a three-dimensional knitted fabric that includes a front/back double-layer knitted fabric with a front layer and a back layer and a connecting layer composed of connecting thread that connects together the layers of the front/back double-layer knitted fabric, has pattern threads inlay stitched in the openings of the front layer knitted fabric of the three-dimensional knitted fabric.

Specifically, the present invention is as follows.

[1] A surface covering material comprising a three-dimensional knitted fabric that includes a front/back double-layer knitted fabric with a front layer and a back layer, and a connecting layer composed of connecting thread that connects together the layers of the front/back double-layer knitted fabric, wherein the front layer knitted fabric has openings, and pattern thread is inlay stitched in the openings.

[2] The surface covering material according to [1] above, wherein the length A of the pattern thread **visible** through the openings is 0.50 mm to 2.50 mm, as viewed from the front side of the front layer knitted fabric.

[3] The surface covering material according to [1] or [2] above, wherein the difference ΔH between the average value for the heights of two stitches holding both ends of the pattern thread **visible** through the openings, and the height of the pattern thread, is 0.10 mm or greater, as viewed from the front side of the front layer knitted fabric.

[4] The surface covering material according to any one of [1] to [3] above, wherein the value ΔH/A, which is the difference ΔH between the average value for the heights of two stitches holding both ends of the pattern thread visible through the openings, and the height of the pattern thread, divided by the length A of the pattern thread visible through the openings, is 0.02 or greater.

[5] The surface covering material according to any one of [1] to [4] above, wherein the front layer knitted fabric has a mesh structure, and the openings are mesh openings.

[6] The surface covering material according to any one of [1] to [4] above, wherein the front layer knitted fabric has a ridge structure, and the openings are the recesses of the gaps between adjacent convex ridges.

[7] The surface covering material according to any one of [1] to [6] above, wherein the stitch density of the front layer knitted fabric is 11,000 to 21,000.

[8] The surface covering material according to [7] above, wherein the stitch density of the front layer knitted fabric is 11,500 to 20,000.

[9] The surface covering material according to [8] above, wherein the stitch density of the front layer knitted fabric is 13,000 to 19,000.

[10] The surface covering material according to [9] above, wherein the stitch density of the front layer knitted fabric is 14,000 to 19,000.

[11] The surface covering material according to any one of [1] to [10] above, wherein the air permeability from the connecting layer side toward the front layer knitted fabric, is 40 cc/cm$^2$/sec or greater.

[12] The surface covering material according to [11] above, wherein the air permeability from the connecting layer side toward the front layer knitted fabric, is 50 cc/cm$^2$/sec or greater.

[13] The surface covering material according to [11] above, wherein the air permeability from the connecting layer side toward the front layer knitted fabric, is 60 cc/cm$^2$/sec or greater.

[ADVANTAGEOUS EFFECTS OF INVENTION]

The surface covering material comprising a three-dimensional knitted fabric with a front/back double layer according to the invention exhibits a high design property with a sense of depth by the pattern thread inlay stitched into the front layer knitted fabric, while simultaneously inhibiting pull-out of pattern threads and fluff generation even when the surface is rubbed by hard protrusions such as the hook sections of a hook-and-loop fastener, and further provides a high cooling property and stuffiness resistance while sitting.

BRIEF DESCRIPTION OF DRAWINGS

Fig. 1 is a schematic view showing an example of the invention in which pattern threads are inlay stitched into a knitted fabric having a mesh structure on the front layer.
Fig. 2 is a schematic view showing an example of the invention in which pattern threads are inlay stitched into a knitted fabric having a ridge structure on the front layer.
Fig. 3 is a schematic view showing an example of the invention in which pattern thread is inlay stitched in different mesh openings of a knitted fabric having a mesh structure on the front layer.

DESCRIPTION OF EMBODIMENTS

The invention will now be explained in detail using an embodiment.

The surface covering material according to one embodiment of the invention (also referred to herein as "the embodiment") is a surface covering material comprising a three-dimensional knitted fabric that includes a front/back double-layer knitted fabric with a front layer and a back layer, and a connecting layer composed of connecting thread that connects together the layers of the front/back double-layer knitted fabric, wherein the front layer knitted fabric has openings, and pattern thread is inlay stitched in the openings.

The surface covering material of the embodiment includes a three-dimensional knitted fabric constructed of a front/back double-layer knitted fabric, and connecting thread connecting the double-layer knitted fabric. The three-dimensional knitted fabric is knitted with a double Raschel warp knitting machine, the knitting machine gauge preferably being 18 to 28 gauge.

The three-dimensional knitted fabric forming the surface covering material of the embodiment has openings in the front layer knitted fabric. The term "openings" for the purpose of the embodiment refers to gaps formed in some or all of the courses of the stitch rows in the warp direction forming the front layer knitted fabric, by adjacent stitch rows having portions that open gaps of 0.50 mm or greater in the course direction (weft direction), and it indicates open states that are approximately diamond-shaped, approximately quadrilateral, approximately circular or approximately straight linear. The front layer knitted fabric may have such openings by a mesh structure or ridge structure, for example.

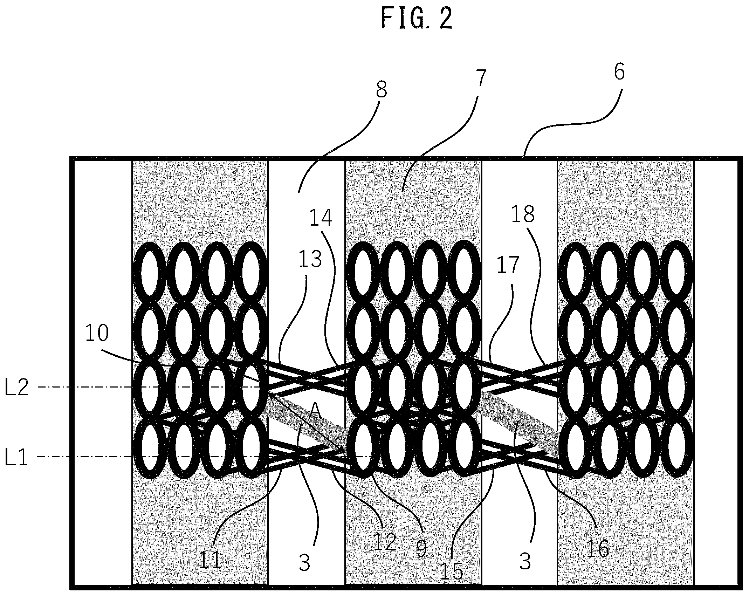

Any warp knitted structure may be used to form the mesh structure or ridge structure in the front layer knitted fabric. When forming a mesh structure, preferably it is a mesh structure having a thread removal arrangement such as 1-in, 1-out or 2-in, 2-out when supplying yarn from the guide bar using at least two reeds of the knitting machine. When forming a ridge structure, the preferred method is one in which at least two reeds of the knitting machine are used with a thread removal arrangement of 1-in, 1-out or 2-in, 2-out when yarn is supplied from the guide bar, and a sinker loop of at least two stitch rows continuous in the lengthwise direction (warp direction) of the knitted fabric, supplied from two guide bars, is set in a state with proper tension in opposite right-left directions by movement of the two guide bars, in order to bring together the stitch rows to produce a convex ridge structure, from the viewpoint of shape stability of the convex ridges, in which case it is preferred for the sinker loop to be connected at least once every 3 courses across adjacent convex ridges in order to stabilize the convex ridges and the pattern thread form and reduce generation of fluff on the surface. Fig. 2 shows an example in which the convex ridges are formed by 4 stitch rows. The sinker loops 13, 18 and 11, 16 pull the two right-left stitch rows of the 4 stitch rows of the convex ridge 7 in opposite right-left directions, causing convergence of the stitch rows to form a convex ridge structure.

The mesh structures or ridge structures do not all need to be the same mesh structures or ridge structures throughout all of the courses of the knitted fabric, and they may have structures with a combination of different knitted textures in some of the courses.

The three-dimensional knitted fabric composing the surface covering material of the embodiment has pattern thread inlay stitched in the openings of the front layer knitted fabric. When the front layer knitted fabric is a mesh structure or ridge structure, the pattern thread is inlay stitched in the mesh openings or the recesses of the gaps between adjacent convex ridges. The pattern thread is inlay stitched across the openings at an arbitrary angle in the approximate warp direction, the approximate weft direction or the approximate diagonal direction as seen from the front side of the front layer knitted fabric.

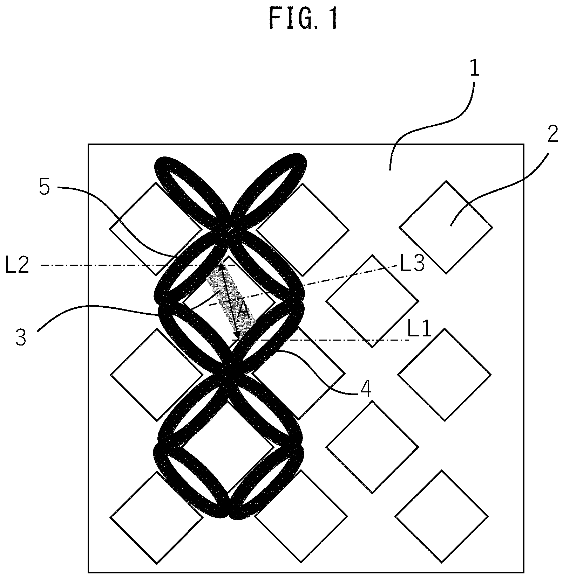

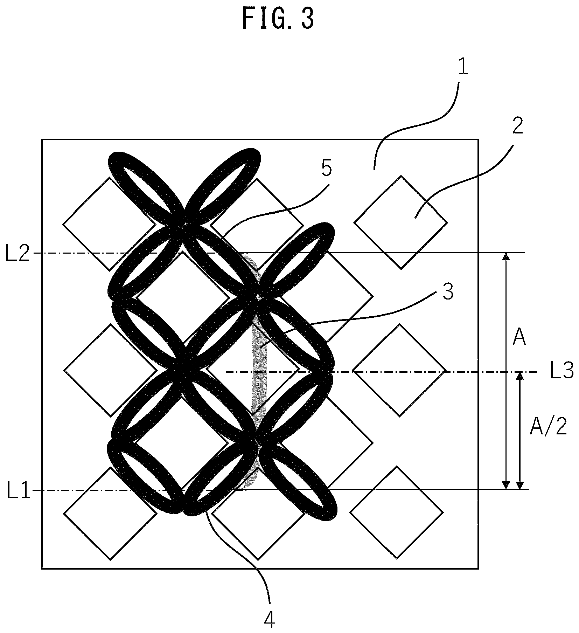

Fig. 1 shows an example with pattern threads inlay stitched in mesh openings. In Fig. 1, the pattern thread 3 is inlay stitched from one stitch 4 facing one mesh opening 2, across the opening in the approximate diagonal direction as seen from the front side of the front layer knitted fabric, to another stitch 5 facing the same mesh opening. The pattern thread 3 is thus preferably inlay stitched so that it is held by the stitches (4 and 5) facing the same opening, but it may also be inlay stitched so that it is held by the stitches (4 and 5) facing different openings 2, as shown in Fig. 3.

Fig. 2 shows an example of a state in which pattern thread is inlay stitched in the recesses of the gaps between adjacent convex ridges. In Fig. 2, the pattern thread 3 is inlay stitched from one stitch 9 facing a recess 8, among the stitch rows forming the convex ridge 7, across the recess 8 in the approximate diagonal direction as seen from the front side of the front layer knitted fabric, to another stitch 10 facing the same recess. The pattern thread 3 is thus preferably inlay stitched so that it is held by the stitches included in the adjacent raised sections 7 on either side of the recess 8, but it may also be inlay stitched so that it is held by stitches of the same raised section 7.

As shown in Fig. 2, by having the inlay stitched pattern thread 3 situated under one stitch 9 and another stitch 10 which are inlay stitched, as seen from the front side of the front layer knitted fabric, and having one and another stitch sinker loop present further under the pattern thread 3, and/or different stitch sinker loops 11, 12, 13, 14 within the same course, the pattern thread is in a state held between a stitch and sinker loop.

The term "pattern thread" in regard to the embodiment refers to a filament with a different outer appearance, such as color, shape and gloss, than the filaments forming the front layer knitted fabric, which increases the design property by the contrast in outer appearance with the filament forming the front layer knitted fabric. The pattern thread may have a different outer appearance such as color, shape and gloss at the gray fabric stage of the three-dimensional knitted fabric, or it may have an altered outer appearance such as color, shape and gloss in a post-treatment stage. The pattern thread preferably has a different color than the filaments forming the front layer knitted fabric, and more preferably the pattern thread of a different color is visible with a sense of depth from below the filaments forming the front layer knitted fabric, to increase the design property.

When the pattern thread is inserted into an opening of the front layer knitted fabric it may be inserted in any course and any wale. In order to help prevent the pattern thread from being pulled out by protrusions, for example, the pattern thread is preferably held between two or more stitches on the same course and the sinker loop of the stitch, at least once every 4 courses. The pattern thread may also be knit stitched so as to form a partial stitch while inlay stitching.

According to the embodiment, the length of the pattern thread **visible** through the openings of the front layer knitted fabric (for example, A in Fig. 1 to Fig. 3) is preferably 0.50 mm to 2.50 mm and more preferably 0.50 mm to 2.30 mm, as seen from the front side of the front layer knitted fabric. If the length of the pattern thread is less than 0.50 mm, the effect of increasing the design property will be reduced, while if it is greater than 2.50 mm it will be difficult to inhibit pull-out of pattern threads and fluff generation when the surface is rubbed by a hard protrusion such as a hook section of a hook-and-loop fastener.

The surface covering material of the embodiment has a stitch density for the front layer knitted fabric of preferably 11,000 to 21,000, more preferably 11,500 to 20,000, even more preferably 13,000 to 19,000 and most preferably 14,000 to 19,000.

As used herein, the term "stitch density" refers to the state of compactness of the stitches in the front layer knitted fabric as represented by the following formula:

$$\text{Stitch density } M = N \times \sqrt{D}$$

{where N is the number of stitches of the front layer knitted fabric per 2.54 cm-square, and D is the total fineness (decitex) of a filament forming one stitch of the front layer knitted fabric}.

The phrase "total fineness of the filament forming one stitch of the front layer knitted fabric" indicates the total fineness of only the filaments forming the stitches, while excluding the fineness of the connecting thread, and further excluding non-stitch-forming filaments such as inlay stitching. If the stitch density is 11,000 or greater, hard protrusions such as hook sections of a hook-and-loop fastener are less likely to catch onto individual filaments of the stitches on the front layer, and this will tend to prevent fluff from being produced by breakage of the individual filaments. The inlay stitched pattern thread will also be less likely to slip between the stitches and sinker loops, and will be less likely to be pulled out by protrusions such as hook sections of a hook-and-loop fastener. If the stitch density is 21,000 or lower, on the other hand, the front layer knitted fabric will exhibit sufficient air permeability, so that the movement of heat or humidity will take place by air convection current to provide a more satisfactory refreshing feel and stuffiness resistance when sitting. To obtain a stitch density of 11,000 to 21,000 it is preferred to adjust the fineness of the fibers used in the front layer knitted fabric, the knitting machine gauge, the machine course, the knitted texture and the width insertion rate during finishing including heat setting, the width expansion rate, the overfeed rate and the underfeed rate.

The materials of the filaments used for the front layer knitted fabric and the pattern thread are not restricted, and may be a single type of material or multiple materials combined by plying, combined twisting, mixed spinning or mixed knitting, although long fibers of polyethylene terephthalate are preferred from the viewpoint of raw yarn strength and light fastness. From the viewpoint of increasing withdrawal resistance of the individual filaments to inhibit pulling of the individual filaments of the knitted fabric surface and the individual filaments of the pattern thread by protrusions such as hook sections of a hook-and-loop fastener, polyethylene terephthalate fibers are preferably false twisted yarn, interlaced yarn or twisted threads.

The fineness of the fibers used for the front layer knitted fabric is preferably a fineness of 100 decitex to 350 decitex, for optimization of the stitch density. From the same viewpoint, the total fineness per single stitch composed of the filaments forming the front layer knitted fabric is preferably 150 decitex to 800 decitex. The fineness of the filaments used in the pattern thread is preferably a fineness of at least 1/2 of the total fineness of the filaments forming one stitch of the front layer knitted fabric, from the viewpoint of causing the pattern to stand out while simultaneously inhibiting "pull-out" of the pattern thread by protrusions.

When the filaments and pattern thread used in the front layer knitted fabric are multifilaments, the single fiber fineness is preferably 1 decitex to 6 decitex, and more preferably 3 decitex to 6 decitex, which provides higher monofilament strength.

The filaments used for the connecting thread are preferably monofilaments. When monofilaments are used as the connecting thread, the fineness is preferably 30 decitex to 300 decitex and more preferably 50 decitex to 250 decitex, in order to inhibit protrusion of the monofilaments onto the knitted fabric surface and maintain a satisfactory cushioning property.

If the monofilaments protrude out from the knitted fabric surface of the three-dimensional knitted fabric they will tend to catch onto protrusions such as hook sections of a hook-and-loop fastener, and therefore preferably the stitches of the filaments forming the front layer knitted fabric hold down the stitches of the monofilaments so that the monofilaments do not protrude onto the front side of the front layer knitted fabric, for which purpose the ratio of the fineness D2 (decitex) of the monofilaments with respect to the total fineness D (decitex) of each stitch composed of filaments forming the front layer knitted fabric preferably satisfies the following relational expression:

$$D/D2 \geq 3.$$

When the three-dimensional knitted fabric composing the surface covering material of the embodiment is viewed from the front side of the front layer knitted fabric, the height difference $\Delta$H (mm) between the average value for the heights of two stitches H1 (mm) holding both ends of the pattern thread **visible** through the openings, and the height of the pattern thread H2 (mm) is preferably 0.10 mm or greater for inhibiting pull-out of pattern threads and fluff generation when the surface is rubbed by hard protrusions such as hook sections of a hook-and-loop fastener, and the height difference $\Delta$H is more preferably 0.20 mm or greater and even more preferably 0.30 mm or greater for imparting a design property with a sense of depth.

The average value for the heights of two stitches H1 holding both ends of the pattern thread is calculated by drawing straight lines L1, L2 in the course direction (weft direction) between the 2 points at maximum linear distance length (the 2 points that determine the length of the pattern thread) within the distance between the side where the pattern thread contacts the stitch 4 and the side where it contacts the stitch 5 over the full area of the pattern thread **visible** in an opening, and calculating the average of the highest height of the stitch 4 on the straight line L1 and the highest height of the stitch 5 on the straight line L2, as shown in Fig. 1, for example. The height of the pattern thread H2 (mm) is the highest height of the pattern thread on a straight line L3 drawn perpendicular to a line of length A of the pattern thread from the center point of the length A (mm) (location A/2).

The value of $\Delta$H divided by A ($\Delta$H/A) is highly correlated with pull-out of pattern threads and fluff generation. In order to reduce pull-out of pattern threads and fluff generation, $\Delta$H/A is preferably 0.02 or greater, more preferably 0.04 or greater, even more preferably 0.15 or greater and most preferably 0.20 or greater.

In order to cause movement of heat or humidity from the human body when sitting for more satisfactory coolness and stuffiness resistance, the surface covering material of the embodiment has air permeability from the connecting layer between the front/back double-layer knitted fabric of the three-dimensional knitted fabric (hereunder also referred to simply as "connecting layer") toward the front layer knitted fabric, of preferably 40 cc/cm$^2$/sec or greater, more preferably 50 cc/cm$^2$/sec or greater and even more preferably 60 cc/cm$^2$/sec or greater.

As used herein, the phrase "air permeability from the connecting layer side between the front/back double-layer knitted fabric of the three-dimensional knitted fabric toward the front layer knitted fabric" means the air permeability of the three-dimensional knitted fabric measured under the suction conditions of the air permeability test method (Method A) of JIS L1096, with a three-dimensional knitted fabric test piece size of 15 cm-square set on the opening of the air permeability tester with the front layer knitted fabric facing downward, and a 3 mm-thick, 20 cm-square silicon rubber plate placed over the outer surface of the back layer knitted fabric to shield air from passing through the back layer knitted fabric, while allowing the air to enter through the four sided cross-section of the three-dimensional knitted fabric and pass through the connecting layer to permeate the front layer knitted fabric.

In order to increase the air permeability from the connecting layer side toward the front layer knitted fabric of the three-dimensional knitted fabric, it is especially effective to reduce pressure loss during passage of air through the connecting layer, and for this purpose it is preferred to relatively reduce the number of connecting threads forming the connecting layer of the three-dimensional knitted fabric, with respect to the number of stitches in the front layer knitted fabric. From the same viewpoint, the number of stitches of connecting thread is knitted into the front layer knitted fabric of the three-dimensional knitted fabric for this embodiment is preferably 1/4 to 1/2 of the total number of stitches in the front layer knitted fabric. The total number of stitches in the front layer knitted fabric is the number of stitches in a 2.54 cm-square piece of front side knitted fabric and can be calculated as the product of the number of courses/2.54 cm and the number of wales/2.54 cm.

The air permeability from the back layer knitted fabric through the front layer knitted fabric of the three-dimensional knitted fabric, as generally measured according to the air permeability test method (Method A) of JIS L1096, is preferably 50 cc/cm$^2$/sec or greater, more preferably 60 cc/cm$^2$/sec or greater and even more preferably 80 cc/cm$^2$/sec or greater. The air permeability from the back layer knitted fabric through the front layer knitted fabric is more preferably 50 cc/cm$^2$/sec or greater, for a seat surface covering material to be used in combination with a cushion member incorporating a ventilation system.

The fibers used to form the three-dimensional knitted fabric may be of any desired material, optionally with different fiber materials in combination, but 100% polyethylene terephthalate fibers are preferred for the front layer knitted fabric, pattern thread, connecting thread and back layer knitted fabric from the viewpoint of easier recycling such as material recycling or chemical recycling. Such fibers may be undyed, but it is preferred to use raw-dyed yarn or colored yarn to reduce changes in quantity of the three-dimensional knitted fabric during dyeing. It is even more preferred to use raw-dyed yarn kneaded with a pigment or the like in order to eliminate the need for a dyeing step. The raw-dyed yarn used for the fibers composing the front layer knitted fabric is preferably heather thread that is a composite mix of two or more differently colored raw-dyed yarns, to further enhance the design property.

The thickness of the three-dimensional knitted fabric forming the surface covering material of the embodiment may be set as desired, but it is preferably 2.5 mm to 12 mm and more preferably 3 mm to 8 mm, from the viewpoint of sewability and handleability of the surface covering material.

While the basis weight of the three-dimensional knitted fabric forming the surface covering material of the embodiment may be set as desired, it is preferably 400 to 1000 g/m$^2$ and more preferably 400 to 900 g/m$^2$.

When the three-dimensional knitted fabric uses colored yarn or raw-dyed yarn, the method of finishing the three-dimensional knitted fabric forming the surface covering material of the embodiment may be finishing by passing the greige through steps such as scouring and heat setting, but finishing by heat setting alone is preferred from the viewpoint of process simplification. For a three-dimensional knitted fabric wherein any of the fibers used for the front/back double-layer knitted fabric, pattern thread or connecting thread are uncolored, the greige may be finished by processing by steps such as presetting, scouring, dyeing and heat setting.

The surface covering material of the embodiment can be used in a seat or an upholstery material for an automobile, optionally with urethane laminated on the back side similar to conventional surface covering materials, but it is preferably used without lamination from the viewpoint of the recycling property.

EXAMPLES

The present invention will now be explained in more specific detail through the following Examples, some of which are not according to the invention, and Comparative Example, , with the understanding that the invention is in no way limited to the Examples.

The following methods were used to measure the physical properties of the three-dimensional knitted fabrics used in the following Examples.

(a) Length A of pattern thread **visible** through the openings (mm)

A VR-3000 one-shot 3D microscope by Keyence Corp. is used to observe the outer surface of the front layer knitted fabric of the three-dimensional knitted fabric at a magnification of 25x to 38x, with auto-focus and 3D measurement. The length of the pattern thread **visible** through the openings is measured from the photographed 3D image. The length A (mm) of the pattern thread is the length of a straight line connecting the 2 points where the pattern thread has the longest linear distance within the distance between the surfaces contacting with the two stitches holding the pattern thread, throughout the full area of the pattern thread **visible** through an opening. For example, when the pattern thread appears as an approximate trapezoid, it is the distance connecting the corners of the bases of the trapezoid, and when the pattern thread appears as an approximate diamond shape, it is the distance connecting the corners by the longest diagonal.

(b) Stitch density of front layer knitted fabric

A thread is extracted from the front layer knitted fabric of a three-dimensional knitted fabric and the total fineness D (decitex) of the filament forming a single stitch of the front layer knitted fabric is measured. The connecting thread and pattern thread are not included in the measurement. The product N of the number of courses/2.54 cm and the number of wales/2.54 cm of the three-dimensional knitted fabric is measured and the stitch density of the front layer knitted fabric is calculated by the following formula:

$$\text{Stitch density } M = N \times \sqrt{D}.$$

(c) Difference ΔH (mm) between average value for the heights of two stitches H1 (mm) holding both ends of the pattern thread **visible** through the openings, and height of the pattern thread H2 (mm).

For the measurement of (a), straight lines L1, L2 are drawn running through the respective points at both ends of the length A and parallel to the course direction (weft direction), and the highest height of one stitch holding the pattern thread on straight line L1 and the highest height of the other stitch holding the pattern thread on straight line L2 are measured, calculating their average as H1 (mm). The highest height of the pattern thread on a straight line L3 drawn perpendicular to the line A from the center point of the length A (mm) of the pattern thread (located at A/2) is measured as H2 (mm), and ΔH (mm) is calculated as the absolute value of the difference between H1 (mm) and H2 (mm). The measurement is conducted at 10 locations and the average is calculated.

(d) Air permeability (cc/cm$^2$/sec) from connecting layer toward front side knitted fabric.

An FX3300 LABOAIR IV air permeability tester by Takayama Reed Co., Ltd. is used, placing the three-dimensional knitted fabric test piece with a size of 15 cm-square on the opening of the air permeability tester with the front layer knitted fabric of the three-dimensional knitted fabric facing downward, a 3 mm-thick, 20 cm-square silicon rubber plate is placed over the outer surface of the back layer knitted fabric, pressing the test head of the air permeability tester from above while anchoring with a clamp, and the air permeability entering from the connecting layer of the four sided cross-section of the three-dimensional knitted fabric through the front side knitted fabric is measured under suction conditions according to the air permeability test method (Method A) of JIS L1096.

(e) Air permeability (cc/cm$^2$/sec) from back layer knitted fabric through front layer knitted fabric of three-dimensional knitted fabric

An FX3300 LABOAIR IV air permeability tester by Takayama Reed Co., Ltd. is used to measure the air permeability from the back layer knitted fabric through the front layer knitted fabric of the three-dimensional knitted fabric, according to the air permeability test method (Method A) of JIS L1096.

(f) Fluff generated by hook-and-loop fastener (grade)

Using a flat abrasion tester by Daiei Kagaku Seiki Mfg. Co., Ltd., a three-dimensional knitted fabric with a test piece size width of 8 cm and a length of 31 cm is placed on the flat abrasion table of a flat abrasion tester with the front layer knitted fabric facing upward, and both ends are anchored with a clamp. Magic Tape™ A8693Y.71 (length: 5 cm) by Kuraray Fastening Co., Ltd. is attached to a friction block with the hook side facing outward. A reciprocal abrasion test is carried out 5 times with the friction block set on the test piece, using a pressing load of 9.8 N including the friction block, a stroke of 14 cm and a speed of 60 ±10 strokes/min. Test pieces are taken in the warp direction and weft direction of the three-dimensional knitted fabric and measured, observing the state of fluff in the front layer knitted fabric of the test piece after the test and assessing the grade as follows. The assessment is made with 0.5 grade increments.

Grade 5: No fluff found
Grade 4: Slight fluff found
Grade 3: Clear fluff found but no visible yarn breakage
Grade 2: Moderate fluff with some yarn breakage or yarn "pulling"
Grade 1: Considerable fluff, severe impairment of outer appearance

(g) "Pull-out" of pattern thread and fluff produced by hook-and-loop fastener (grade)

Following the test of (f) above, pull-out and fluff of only the pattern thread single yarns is observed, and the grade is assessed as follows. The assessment is made with 0.5 grade increments.

Grade 5: No "pull-out" or fluff of single yarns observed

Grade 4: Slight "pull-out" or fluff of single yarns observed
Grade 3: Distinct "pull-out" or fluff of single yarns observed, but without yarn breakage
Grade 2: Moderate "pull-out" or fluff of single yarns observed, with some yarn breakage
Grade 1: Notable "pull-out" or fluff of single yarns observed, with severely impaired outer appearance

(h) Design property with sense of depth

The front layer knitted fabric of the surface covering material is observed from the front side, and the three-dimensional aspect of depth in the color pattern is assessed as a grade on the following scale. The assessment is made with 0.5 grade increments.

Grade 5: Extremely high sense of depth
Grade 4: Very high sense of depth
Grade 3: Some sense of depth
Grade 2: Almost no sense of depth
Grade 1: Absolutely no sense of depth

(i) Coolness feel

The surface covering material was spread over a urethane pad on the seat and back support section of an automobile seat, to fabricate a seat wherein the total surface of the seat for contact with the human body was made of a surface covering material made of a three-dimensional knitted fabric.
The seat was set in a temperature and humidity environment at 30°C, 50% RH, and an evaluation monitor participant was asked to rest for 30 minutes in that environment before sitting on the seat for 10 minutes. The refreshing feel was evaluated by the following grade assessment, based on whether or not the monitor felt hotter after 10 minutes compared to before sitting. The assessment is made with 0.5 grade increments. Five monitors participated, recording the average value for the five.

Grade 5: Extremely hot feel with discomfort
Grade 4: Very hot feel
Grade 3: Hot feel
Grade 2: Slightly hot feel
Grade 1: Slightly hot feel but not bothersome
Grade 0: No change

(j) Sultry feel

The seat was set in a temperature and humidity environment at 30°C, 50% RH, and an evaluation monitor participant was asked to rest for 30 minutes in the environment before sitting on the seat for 10 minutes, in the same manner as (i). The stuffiness was evaluated by the following grade assessment, based on whether or not the monitor felt stuffiness after 10 minutes compared to before sitting. The assessment is made with 0.5 grade increments. Five monitors participated, recording the average value for the five.

Grade 5: Extremely sultry with discomfort
Grade 4: Very sultry
Grade 3: Sultry
Grade 2: Slightly sultry
Grade 1: Slightly sultry but not bothersome
Grade 0: No change

[Example 1]

A 22-gauge double Raschel knitting machine having 6 reeds and 6 mm trick plate distance was used to supply false twisted yarn of 167 decitex, 48 filament polyethylene terephthalate fibers (black raw-dyed yarn) from two reeds (L2, L3) for formation of the front layer knitted fabric, doubling the yarns in 1-in, 1-out (L2) and 1-out, 1-in (L3) arrangements, to supply false twisted yarn of 167 decitex, 48 filament polyethylene terephthalate fibers (gray raw-dyed yarn) from a reed (L1) for inlay stitching of pattern thread in the front layer knitted fabric, doubling the yarns in a 1-in, 1-out arrangement, to supply a monofilament of 110 decitex polyethylene terephthalate fibers (black raw-dyed yarn) from one reed (L4) for formation of the connection part in a 1-in, 1-out arrangement, and to further supply false twisted yarn of 167 decitex, 48 filament polyethylene terephthalate fibers (black raw-dyed yarn) from two reeds (L5, L6), for formation of the back layer knitted fabric, in an all-in array.

In the following knitted textures, the three-dimensional knitted fabric greiges were knitted in a machine course of 35 course/2.54 cm, with the pattern thread held by one stitch facing the mesh opening, and a stitch of the next course. Each obtained greige was dry heat set at 175°C × 1 minute with 0% width expansion and a 0% overfeed rate to obtain a three-dimensional knitted fabric having the properties listed in Table 1, for use as a surface covering material.

(Knitted texture)

L1: 3333/3333/4444/0000/(1-in, 1-out)
L2: 1011/2322/(1-in, 1-out)
L3: 2322/1011/(1-out, 1-in)
L4: 3410/4367/(1-in, 1-out)
L5: 0001/1110/(all-in)
L6: 2234/2210/(all-in)

[Example 2] (not according to the invention)

A three-dimensional knitted fabric having the properties shown in Table 1 was obtained in the same manner as Example 1, except that false twisted yarn of 167 decitex, 48 filament polyethylene terephthalate fibers (gray raw-dyed yarn) was supplied from a reed (L1), for inlay stitching of the pattern thread, doubling the yarns in a 1-in, 1-out arrangement, and the pattern thread was knitted with the knitted texture shown below, so that the pattern thread spanned three mesh openings and was held by one stitch and the stitch of the next 3rd course, forming a fabric which was used as a surface covering material.

(Knitted texture)

L1: 3333/0000/0000/0000/(1-in, 1-out)
L2: 1011/2322/(1-in, 1-out)
L3: 2322/1011/(1-out, 1-in)
L4: 3410/4367/(1-in, 1-out)
L5: 0001/1110/(all-in)
L6: 2234/2210/(all-in)

[Examples 3 to 4]

An 18-gauge double Raschel knitting machine having 6 reeds and 6 mm trick plate distance was used to supply false twisted yarn of 334 decitex, 72 filament polyethylene terephthalate fibers (black raw-dyed yarn) from two reeds (L2, L3) for formation of the front layer knitted fabric, doubling the yarns in 1-in, 1-out (L2) and 1-out, 1-in (L3) arrangements, to supply false twisted yarn of 167 decitex, 48 filament polyethylene terephthalate fibers (gray raw-dyed yarn) from a reed (L1) for inlay stitching of pattern thread in the front layer knitted fabric, doubling the yarns in a 1-in, 1-out arrangement, to supply a monofilament of 110 decitex polyethylene terephthalate fibers (black raw-dyed yarn) from one reed (L4) for formation of the connection part in a 1-in, 1-out arrangement, and to further supply false twisted yarn of 167 decitex, 48 filament polyethylene terephthalate fibers (black raw-dyed yarn) from two reeds (L5, L6), for formation of the back layer knitted fabric, in an all-in array.

Using the same knitted texture as in Example 1, three-dimensional knitted fabric greiges were knitted in a machine course of 24 course/2.54 cm (Example 3) and 27 course/2.54 cm (Example 4), with the pattern thread held by one stitch facing the mesh opening, and a stitch of the next course. Each obtained greige was dry heat set at 175°C × 1 minute with 0% width expansion and a 0% overfeed rate to obtain a three-dimensional knitted fabric having the properties listed in Table 1, for use as a surface covering material.

[Example 5]

An 18-gauge double Raschel knitting machine having 6 reeds and 6 mm trick plate distance was used to supply false twisted yarn of 334 decitex, 72 filament polyethylene terephthalate fibers (black raw-dyed yarn) from two reeds (L2, L3) for formation of the front layer knitted fabric, doubling the yarns in a 2-in, 2-out (L2, L3) arrangement, to supply false twisted yarn of 167 decitex, 48 filament polyethylene terephthalate fibers (gray raw-dyed yarn) from a reed (L1) for inlay stitching of pattern thread in the front layer knitted fabric, tripling the yarns in a 2-out/1-in, 3-out/1-in, 3-out/... arrangement, to supply a monofilament of 110 decitex polyethylene terephthalate fibers (black raw-dyed yarn) from one reed (L4) for formation of the connection part in a 2-in, 2-out arrangement, and to further supply false twisted yarn of 167 decitex, 48 filament polyethylene terephthalate fibers (black raw-dyed yarn) from two reeds (L5, L6), for formation of the back layer knitted fabric, in an all-in array.

In the following knitted textures, the three-dimensional knitted fabric greiges were knitted in a machine course of 30 course/2.54 cm, with the pattern thread held by one stitch facing the recess of the adjacent convex ridge, and the stitch on the opposite side across the recess of the same course. Each obtained greige was dry heat set at 175°C × 1 minute with 0% width expansion and a 0% overfeed rate to obtain a three-dimensional knitted fabric having the properties listed in Table 1, for use as a surface covering material.

(Knitted texture)

L1: 0000/4444/(2-out/1-in, 3-out/1-in, 3-out/repeat left array)
L2: 1011/2344/6766/5433/(2-in, 2-out)
L3: 6766/5433/1011/2344/(2-in, 2-out)
L4: 1043/6734/(2-in, 2-out)
L5: 0001/1110/(all-in)
L6: 2234/2210/(all-in)

[Example 6]

A three-dimensional knitted fabric having the properties shown in Table 1 was obtained in the same manner as Example 5, except that false twisted yarn of 167 decitex, 48 filament polyethylene terephthalate fibers (gray raw-dyed yarn) was supplied from a reed (L1) for inlay stitching of the pattern thread and was tripled in a 2-out/1-in, 3-out/1-in, 3-out/... arrangement, and the greige for the three-dimensional knitted fabric was knitted with the knitted texture shown below, so that the pattern thread was held by one stitch facing the recess between adjacent convex ridges and the stitch of the next 3rd course on the opposite side across the recess, forming a fabric which was used as a surface covering material.

(Knitted texture)

L1: 0000/2222/2222/2222/4444/2222/2222/2222/(2-out/1-in, 3-out/1-in, 3-out/ repeat left array)
L2: 1011/2344/6766/5433/(2-in, 2-out)
L3: 6766/5433/1011/2344/(2-in, 2-out)
L4: 1043/6734/(2-in, 2-out)
L5: 0001/1110/(all-in)
L6: 2234/2210/(all-in)

[Example 7,8] (Example 8 not according to the invention)

A three-dimensional knitted fabric having the properties shown in Table 1 was obtained in the same manner as Example 3, except that false twisted yarn of 167 decitex, 48 filament polyethylene terephthalate fibers (gray raw-dyed yarn) was supplied from a reed (L1), for inlay stitching of the pattern thread, doubling the yarns in a 1-out, 1-in arrangement, and the pattern thread was knitted with the knitted texture shown below in a machine course of 30 course/2.54 cm (Example 7) or 34 course/2.54 cm (Example 8), so that the pattern thread was held by one stitch facing the mesh opening and another stitch of the same course, with a width insertion rate of 8% during heat setting, forming a fabric which was used as a surface covering material.

(Knitted texture)

L1: 4444/0000/(1-out, 1-in)
L2: 1011/2322/(1-in, 1-out)
L3: 2322/1011/(1-out, 1-in)
L4: 3410/4367/(1-in, 1-out)
L5: 0001/1110/(all-in)
L6: 2234/2210/(all-in)

[Example 9] (not according to the invention)

A three-dimensional knitted fabric having the properties shown in Table 1 was obtained in the same manner as Example 2, except that the feed rate of the pattern thread supplied from the reed (L1) was knitted with 5% increase over Example 2, forming a fabric which was used as a surface covering material.

[Example 10] (not according to the invention)

An 18-gauge double Raschel knitting machine having 6 reeds and 6 mm trick plate distance was used to supply false twisted yarn of 334 decitex, 72 filament polyethylene terephthalate fibers (black raw-dyed yarn) from two reeds (L2, L3) for formation of the front layer knitted fabric, doubling the yarns 2-in, 2-out (L2) and 2-out, 2-in (L3) arrangements, to supply false twisted yarn of 167 decitex, 48 filament polyethylene terephthalate fibers (gray raw-dyed yarn) from a reed (L1) for inlay stitching of pattern thread in the front layer knitted fabric, tripling the yarns in a 1-in, 3-out arrangement, to supply a monofilament of 110 decitex polyethylene terephthalate fibers (black raw-dyed yarn) from one reed (L4) for formation of the connection part in a 2-in, 2-out arrangement, and to further supply false twisted yarn of 167 decitex, 48 filament polyethylene terephthalate fibers (black raw-dyed yarn) from two reeds (L5, L6), for formation of the back layer knitted fabric, in an all-in array.

In the following knitted textures, the three-dimensional knitted fabric greiges were knitted in a machine course of 21 course/2.54 cm, with the pattern thread held by one stitch facing the mesh opening, and another stitch of the same course. Each obtained greige was dry heat set at 175°C × 1 minute with 0% width expansion and a 0% overfeed rate to obtain a three-dimensional knitted fabric having the properties listed in Table 1, for use as a surface covering material.

(Knitted texture)

L1: 2222/6666/2222/4444/0000/4444/(1-in, 3-out)
L2: 1011/2322/1022/4544/3233/4533/(2-in, 2-out)
L3: 4544/3233/4533/1011/2322/1022/(2-out, 2-in)
L4: 1023/1023/1032/4532/4532/4523/(2-in, 2-out)
L5: 0001/1110/(all-in)
L6: 2234/2210/(all-in)

[Comparative Example 1]

A three-dimensional knitted fabric having the properties shown in Table 1 was obtained in the same manner as Example 1, except that false twisted yarn of 167 decitex, 48 filament polyethylene terephthalate fibers (black raw-dyed yarn) was supplied from a reed (L1) for inlay stitching of the pattern thread, doubling the yarns in 1-in, 1-out arrangement, and the fabric was used as a surface covering material.

[Table 1]

| | | Example 1 | Example 2 | Example 3 | Example 4 | Example 5 | Example 6 | Example 7 | Example 8 | Example 9 | Example 10 | Comp. Ex. 1 |
|---|---|---|---|---|---|---|---|---|---|---|---|---|
| Yarn usage | Front layer knitted fabric (yarn used) | PET167/48 Black raw-dyed false-twisted yarn, P2 ply | PET167/48 Black raw-dyed false-twisted yarn, P2 ply | PET334/72 Black raw-dyed false-twisted yarn, P2 ply | PET334/72 Black raw-dyed false-twisted yarn, P2 ply | PET334/72 Black raw-dyed false-twisted yarn, P2 ply | PET334/72 Black raw-dyed false-twisted yarn, P2 ply | PET334/72 Black raw-dyed false-twisted yarn, P2 ply | PET334/72 Black raw-dyed false-twisted yarn, P2 ply | PET 167/8 Black raw-dyed false-twisted yarn, P2 ply | PET334/72 Black raw-dyed false-twisted yarn, P2 ply | PET 16/48 Black raw-dyed false-twisted yarn, P2 ply |
| | Pattern thread | PET167/48 Gray raw-dyed false-twisted yarn, P2 ply | PET167/48 Gray raw-dyed false-twisted yarn, P2 ply | PET167/48 Gray raw-dyed false-twisted yarn, P2 ply | PET167/48 Gray raw-dyed false-twisted yarn, P2 ply | PET167/48 Gray raw-dyed false-twisted yarn, P3 ply | PET167/48 Gray raw-dyed false-twisted yarn, P3 ply | PET167/48 Gray raw-dyed false-twisted yarn, P2 Dly | PET167/48 Gray raw-dyed false-twisted yarn, P2 ply | PET167/48 Gray raw-dyed false-twisted yarn, P2 ply | PET167/48 Gray raw-dyed false-twisted yarn, P3 ply | PET167/48 Black raw-dyed false-twisted yarn, P2 ply |
| | Connecting thread | PET110 | PET110 | PET110 | PET110 | PET110 | PET110 | PET110 | PET110 | PET110 | PET110 | PET110 |
| | Back layer knitted fabric (yarn used) | PET167/36 Black raw-dyed false-twisted yarn | PET167/36 Black raw-dyed false-twisted yarn | PET167/36 Black raw-dyed false-twisted yarn | PET167/36 Black raw-dyed false-twisted yarn | PET167/36 Black raw-dyed false-twisted yarn | PET167/36 Black raw-dyed false-twisted yarn | PET167/36 Black raw-dyed false-twisted yarn | PET167/36 Black raw-dyed false-twisted yarn | PET167/36 Black raw-dyed false-twisted yarn | PET167/36 Black raw-dyed false-twisted yarn | PET167/36 Black raw-dyed false-twisted yarn |
| + Total fineness of fibers forming one stitch of front layer knitted fabric (decitex) | | 343 | 343 | 688 | 688 | 688 | 688 | 688 | 688 | 343 | 688 | 343 |
| Thickness (mm) | | 5.8 | 5.8 | 6.1 | 6.1 | 6.2 | 6.2 | 6.2 | 6.2 | 5.8 | 6.0 | 5.8 |
| Knitting density | Course number/2.54 cm | 35.6 | 35.5 | 25.1 | 28.1 | 31.0 | 31.0 | 32.0 | 35.0 | 35.5 | 21.8 | 35.6 |
| | Wale number/2.54 cm | 23.3 | 23.2 | 20.0 | 20.1 | 19.8 | 19.8 | 22.0 | 22.0 | 23.3 | 20.0 | 23.2 |
| Basis weight (g/m²) | | 680 | 683 | 724 | 752 | 860 | 852 | 830 | 886 | 687 | 735 | 678 |
| Length A of pattern thread visible through the openings (mm) | | 0.92 | 2.50 | 1.02 | 0.95 | 1.57 | 2.29 | 0.51 | 0.30 | 2.63 | 2.61 | 0.81 |
| Stitch density | | 15362 | 15253 | 13167 | 14815 | 16100 | 16100 | 18466 | 20197 | 15319 | 11436 | 15296 |

| | Example 1 | Example 2 | Example 3 | Example 4 | Example 5 | Example 6 | Example 7 | Example 8 | Example 9 | Example 10 | Comp. Ex. 1 |
|---|---|---|---|---|---|---|---|---|---|---|---|
| Difference H between average value for the heights of two stitches holding both ends of pattern thread **visible** through openings, and height of the pattern thread (mm). | 0.22 | 0.11 | 0.38 | 0.39 | 0.45 | 0.39 | 0.45 | 0.47 | 0.05 | 0.40 | 0.21 |
| FH/A | 0.24 | **0.04** | 0.37 | 0.41 | 0.29 | 0.17 | 0.88 | 1.57 | **0.02** | 0.15 | 0.26 |
| Air permeability (cc/cm$^2$/sec) | 98 | 97 | 87 | 76 | 70 | 76 | 62 | 47 | 102 | 129 | 100 |
| Air permeability (cc/cm$^2$/sec) from connecting layer through front side knitted fabric | 84 | 81 | 76 | 70 | 54 | 52 | 53 | 42 | 88 | 96 | 86 |
| Fluff on surface by hook-and-loop fastener (grade) — Warp direction | 4.5 | 3.5 | 4.0 | 4.0 | 3.5 | 3.5 | 4.5 | 4.5 | 3.5 | 1.5 | 4.5 |
| Fluff on surface by hook-and-loop fastener (grade) — Weft direction | 4.0 | 3.0 | 3.5 | 3.5 | 3.0 | 3.0 | 4.0 | 4.5 | 3.0 | 1.5 | 4.0 |
| "Pull-out" of pattern thread and fluff produced by hook-and-loop fastener (grade) — Warp direction | 5.0 | 3.5 | 5.0 | 5.0 | 5.0 | 4.0 | 5.0 | 5.0 | 3.0 | 4.0 | 5.0 |
| "Pull-out" of pattern thread and fluff produced by hook-and-loop fastener (grade) — Weft direction | 5.0 | 3.0 | 5.0 | 5.0 | 5.0 | 3.5 | 5.0 | 5.0 | 3.0 | 3.5 | 5.0 |
| Design property with sense of depth (grade) | 4.5 | 4.0 | 4.5 | 4.5 | 4.0 | 4.5 | 3.5 | 3.0 | 3.0 | 4.5 | 1.0 |
| Refreshing feel (grade) | 1.2 | 1.3 | 1.5 | 1.6 | 1.6 | 1.4 | 2.2 | 3.6 | 1.4 | 1.2 | 1.3 |
| Stuffy feel (grade) | 1.0 | 1.1 | 1.1 | 1.2 | 1.4 | 1.2 | 2.1 | 3.4 | 1.2 | 1.0 | 1.1 |

14

EP 4 350 062 B1

As seen in Table 1, the surface covering materials composed of the three-dimensional knitted fabrics of Examples 1 to 10, which had inlay stitching of a front layer knitted fabric and pattern threads with different colors, exhibited a more three-dimensional feel with a sense of depth of color pattern compared to Comparative Example 1 which did not have inlay stitching of pattern thread, while the design property was high and "pull-out" of the pattern thread by hook-and-loop fasteners was reduced.

In regard to the lengths of the pattern threads, Examples 1 to 8 in which the pattern thread length A was 2.50 mm or less exhibited greater reduction in pull-out of pattern threads and fluff generation, among which Examples 1 to 7 in which the pattern thread lengths were 0.50 mm or greater exhibited design properties with a more three-dimensional feel.

Examples 1 to 8 and Example 10, wherein the difference ΔH between the heights of the stitches holding the pattern thread and the height of the pattern thread was 0.10 mm or greater, had more greatly inhibited pull-out of pattern threads and fluff generation.

Example 2, wherein ΔH/A was 0.04, exhibited slightly improved pull-out of pattern threads and fluff generation in the warp direction, while Examples 1, 3, 4, 5, 6, 7, 8 and 10 wherein ΔH/A was 0.15 or greater exhibited further reduction in pull-out of pattern threads and fluff generation.

In Examples 1 to 9 wherein the stitch density was 11,500 or greater, there was a tendency toward more satisfactory pull-out of pattern threads and fluff generation, as well as surface fluff generation, while in Examples 1 to 7, 9 and 10 wherein the stitch density was 20,000 or lower, there was a tendency toward more satisfactory coolness and stuffiness resistance when sitting.

INDUSTRIAL APPLICABILITY

The surface covering material of the invention can be suitably used for a seat to be placed on a cushion member such as a urethane pad of a seat in a vehicle or furniture, or stretched over a sheet frame, or as a surface covering material to be used for upholstery in a vehicle ceiling or door trimming, or as a surface covering material exhibiting a high design property with a feeling of depth due to the pattern threads while simultaneously inhibiting pull-out of pattern threads and fluff generation even when the surface is rubbed by hard protrusions such as the hook sections of a hook-and-loop fastener.

REFERENCE SIGNS LIST

1 Front layer mesh knitted fabric
2 Mesh opening
3 Pattern thread
4 One stitch facing mesh opening
5 Other stitch facing mesh opening
6 Front layer knitted fabric with ridge structure
7 Convex ridge
8 Recess
9 One stitch facing recess
10 Other stitch facing recess
11 Sinker loop
12 Sinker loop
13 Sinker loop
14 Sinker loop
15 Sinker loop
16 Sinker loop
17 Sinker loop
18 Sinker loop
A Pattern thread length
L1 Straight line in course direction from contact point between stitch 4 and pattern thread 3
L2 Straight line in course direction from contact point between stitch 5 and pattern thread 3
L3 Straight line perpendicular to line A from center point at 1/2 length A

**Claims**

**1.** A surface covering material comprising a three-dimensional knitted fabric knitted with a double Raschel warp knitting machine that includes a front/back double-layer knitted fabric with a front layer (1) and a back layer, and a connecting layer composed of connecting thread that connects together the layers of the front/back double-layer knitted fabric, wherein the front layer knitted fabric has openings (2) and pattern thread (3), which is a filament with a different outer appearance than the filaments forming the front layer knitted fabric, is inlay stitched in the openings (2), **characterised in that** the length A of the pattern thread (3) visible through the openings is 0.50 mm to 2.30 mm, as viewed from the front side of the front layer knitted fabric (1).

2. The surface covering material according to claim 1, wherein the difference ΔH between the average value for the heights of two stitches (4, 5) holding both ends of the pattern thread (3) visible through the openings (2) and the height of the pattern thread (3) is determined as described in the description and is 0.10 mm or greater, as viewed from the front side of the front layer knitted fabric (1).

3. The surface covering material according to claim 1, wherein the value ΔH/A, which is the difference ΔH between the average value for the heights of two stitches (4, 5) holding both ends of the pattern thread (3) visible through the openings (2) and the height of the pattern thread (3) divided by the length A of the pattern thread (3) visible through the openings (2) is determined as described in the description and is 0.02 or greater.

4. The surface covering material according to claim 1, wherein the front layer knitted fabric (1) has a mesh structure, and the openings (2) are mesh openings.

5. The surface covering material according to claim 1, wherein the front layer knitted fabric (1) has a ridge structure, and the openings (2) are the recesses (8) of the gaps between adjacent convex
Asahi Kasei K.K. ridges (7).

6. The surface covering material according to claim 1, wherein the stitch density, determined as described in the description, other than at the openings (2) of the front layer knitted fabric (1) is 11,000 to 21,000.

7. The surface covering material according to claim 6, wherein the stitch density, determined as described in the description, other than at the openings (2) of the front layer knitted fabric (1) is 11,500 to 20,000.

8. The surface covering material according to claim 7, wherein the stitch density, determined as described in the description, other than at the openings (2) of the front layer knitted fabric (1) is 13,000 to 19,000.

9. The surface covering material according to claim 8, wherein the stitch density, determined as described in the description, other than at the openings (2) of the front layer knitted fabric (1) is 14,000 to 19,000.

10. The surface covering material according to claim 1, wherein the air permeability from the connecting layer side toward the front layer knitted fabric (1), determined as described in the description, is 40 cc/cm$^2$/sec or greater.

11. The surface covering material according to claim 10, wherein the air permeability from the connecting layer side toward the front layer knitted fabric (1), determined as described in the description, is 50 cc/cm$^2$/sec or greater.

12. The surface covering material according to claim 10, wherein the air permeability from the connecting layer side toward the front layer knitted fabric (1), determined as described in the description, is 60 cc/cm$^2$/sec or greater.

**Patentansprüche**

1. Oberflächenbelagsmaterial, das aus einem dreidimensionalen Gewirk besteht, das mit einer Doppel-Raschel-Kettenwirkmaschine gewirkt wurde und ein doppellagiges Vorder-/Rückseiten-Gewirk mit einer Vorderschicht (1) und einer Rückschicht sowie eine Verbindungsschicht aus Verbindungsfaden, die die Schichten des doppellagigen Vorder-/Rückseiten-Gewirks miteinander verbindet, umfasst, wobei das Vorderschicht-Gewirk Öffnungen (2) aufweist und in die Öffnungen (2) ein Musterfaden (3) eingenäht ist, der ein Filament mit einem anderen äußeren Erscheinungsbild ist als die Filamente, die das Vorderschicht-Gewirk bilden, **dadurch gekennzeichnet, dass** die durch die Öffnungen sichtbare Länge A des Musterfadens (3), von der Vorderseite des Vorderschichtgewirks (1) aus gesehen, 0,50 mm bis 2,30 mm beträgt.

2. Oberflächenbelagsmaterial gemäß Anspruch 1, wobei die Differenz ΔH zwischen dem Durchschnittswert der Höhen zweier Maschen (4, 5), die die beiden Enden des durch die Öffnungen (2) sichtbaren Musterfadens (3) halten, und der Höhe des Musterfadens (3) wie in der Beschreibung angegeben ermittelt wird und 0,10 mm oder mehr beträgt, von der Vorderseite des Vorderschichtgewirks (1) aus gesehen.

3. Oberflächenbelagsmaterial gemäß Anspruch 1, wobei der Wert $\Delta H/A$, der die Differenz $\Delta H$ zwischen dem Durchschnittswert der Höhen zweier Maschen (4, 5), die die beiden Enden des durch die Öffnungen (2) sichtbaren Musterfadens (3) halten, und der Höhe des Musterfadens (3), geteilt durch die Länge A des durch die Öffnungen (2) sichtbaren Musterfadens (3), darstellt, wie in der Beschreibung angegeben ermittelt wird und 0,02 oder mehr beträgt.

4. Oberflächenbelagsmaterial gemäß Anspruch 1, wobei das Vorderschichtgewirk (1) eine Maschenstruktur aufweist und die Öffnungen (2) Maschenöffnungen sind.

5. Oberflächenbelagsmaterial gemäß Anspruch 1, wobei das Vorderschichtgewirk (1) eine Gratstruktur aufweist und die Öffnungen (2) die Vertiefungen (8) der Lücken zwischen benachbarten konvexen Graten (7) sind.

6. Oberflächenbelagsmaterial gemäß Anspruch 1, wobei die Maschendichte, die so bestimmt wird, wie es in der Beschreibung beschrieben ist, außer an den Öffnungen (2) des Vorderschichtgewirks (1) 11000 bis 21000 beträgt.

7. Oberflächenbelagsmaterial gemäß Anspruch 6, wobei die Maschendichte, die so bestimmt wird, wie es in der Beschreibung beschrieben ist, außer an den Öffnungen (2) des Vorderschichtgewirks (1) 11500 bis 20000 beträgt.

8. Oberflächenbelagsmaterial gemäß Anspruch 7, wobei die Maschendichte, die so bestimmt wird, wie es in der Beschreibung beschrieben ist, außer an den Öffnungen (2) des Vorderschichtgewirks (1) 13000 bis 19000 beträgt.

9. Oberflächenbelagsmaterial gemäß Anspruch 8, wobei die Maschendichte, die so bestimmt wird, wie es in der Beschreibung beschrieben ist, außer an den Öffnungen (2) des Vorderschichtgewirks (1) 14000 bis 19000 beträgt.

10. Oberflächenbelagsmaterial gemäß Anspruch 1, wobei die Luftdurchlässigkeit von der Verbindungsschichtseite her zum Vorderschichtgewirk (1) hin, die so bestimmt wird, wie es in der Beschreibung beschrieben ist, 40 cm$^3$/cm$^2$/s oder mehr beträgt.

11. Oberflächenbelagsmaterial gemäß Anspruch 10, wobei die Luftdurchlässigkeit von der Verbindungsschichtseite her zum Vorderschichtgewirk (1) hin, die so bestimmt wird, wie es in der Beschreibung beschrieben ist, 50 cm$^3$/cm$^2$/s oder mehr beträgt.

12. Oberflächenbelagsmaterial gemäß Anspruch 10, wobei die Luftdurchlässigkeit von der Verbindungsschichtseite her zum Vorderschichtgewirk (1) hin, die so bestimmt wird, wie es in der Beschreibung beschrieben ist, 60 cm$^3$/cm$^2$/s oder mehr beträgt.

**Revendications**

1. Matériau de revêtement de surface comprenant un tissu tricoté tridimensionnel tricoté avec un métier à tricoter chaîne double Rachel qui inclut un tissu tricoté double couche avant/arrière avec une couche avant (1) et une couche arrière, et une couche de liaison composée d'un fil de liaison qui relie les couches du tissu tricoté double couche avant/arrière, dans lequel le tissu tricoté de couche avant a des ouvertures (2) et un fil de motif (3), qui est un filament d'aspect extérieur différent de celui des filaments formant le tissu tricoté de couche avant, est cousu en incrustation dans les ouvertures (2), **caractérisé en ce que** la longueur A du fil de motif (3) visible à travers les ouvertures est de 0,50 mm à 2,30 mm, vue depuis le côté avant du tissu tricoté de couche avant (1).

2. Matériau de revêtement de surface selon la revendication 1, dans lequel la différence $\Delta H$ entre la valeur moyenne pour les hauteurs de deux points (4, 5) maintenant les deux extrémités du fil de motif (3) visible à travers les ouvertures (2) et la hauteur du fil de motif (3) est déterminée comme décrit dans la description et est supérieure ou égale à 0,10 mm, vue depuis le côté avant du tissu tricoté de couche avant (1).

3. Matériau de revêtement de surface selon la revendication 1, dans lequel la valeur $\Delta H/A$, qui est la différence $\Delta H$ entre la valeur moyenne pour les hauteurs de deux points (4, 5) maintenant les deux extrémités du fil de motif (3) visible à travers les ouvertures (2) et la hauteur du fil de motif (3) divisée par la longueur A du fil de motif (3) visible à travers les ouvertures (2) est déterminée comme décrit dans la description et est supérieure ou égale à 0,02.

4. Matériau de revêtement de surface selon la revendication 1, dans lequel le tissu tricoté de couche avant (1) a une structure de maillage, et les ouvertures (2) sont des ouvertures de maillage.

5. Matériau de revêtement de surface selon la revendication 1, dans lequel le tissu tricoté de couche avant (1) a une structure en crêtes, et les ouvertures (2) sont les évidements (8) des espaces entre les crêtes convexes (7) adjacentes.

6. Matériau de revêtement de surface selon la revendication 1, dans lequel la densité de points, déterminée comme décrit dans la description, sauf au niveau des ouvertures (2) du tissu tricoté de couche avant (1) est de 11 000 à 21 000.

7. Matériau de revêtement de surface selon la revendication 6, dans lequel la densité de points, déterminée comme décrit dans la description, sauf au niveau des ouvertures (2) du tissu tricoté de couche avant (1) est de 11 500 à 20 000.

8. Matériau de revêtement de surface selon la revendication 7, dans lequel la densité de points, déterminée comme décrit dans la description, sauf au niveau des ouvertures (2) du tissu tricoté de couche avant (1) est de 13 000 à 19 000.

9. Matériau de revêtement de surface selon la revendication 8, dans lequel la densité de points, déterminée comme décrit dans la description, sauf au niveau des ouvertures (2) du tissu tricoté de couche avant (1) est de 14 000 à 19 000.

10. Matériau de revêtement de surface selon la revendication 1, dans lequel la perméabilité à l'air depuis le côté de la couche de liaison vers le tissu tricoté de couche avant (1), déterminée comme décrit dans la description, est supérieure ou égale à 40 $cm^3/cm^2/s$.

11. Matériau de revêtement de surface selon la revendication 10, dans lequel la perméabilité à l'air depuis le côté de la couche de liaison vers le tissu tricoté de couche avant (1), déterminée comme décrit dans la description, est supérieure ou égale à 50 $cm^3/cm^2/s$.

12. Matériau de revêtement de surface selon la revendication 10, dans lequel la perméabilité à l'air depuis le côté de la couche de liaison vers le tissu tricoté de couche avant (1), déterminée comme décrit dans la description, est supérieure ou égale à 60 $cm^3/cm^2/sec$.

# FIG. 1

FIG. 2

EP 4 350 062 B1

FIG. 3

**EP 4 350 062 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008255508 A
- JP 2004232109 A
- JP 2005126884 A
- US 2014000319 A1